(19) **Europäisches Patentamt**
**European Patent Office**
**Office européen des brevets**

(11) **EP 2 457 941 B1**

(12) **EUROPEAN PATENT SPECIFICATION**

(45) Date of publication and mention
of the grant of the patent:
**17.07.2013 Bulletin 2013/29**

(51) Int Cl.:
*C08J 3/00* (2006.01)     *B29B 7/82* (2006.01)
*C08L 59/04* (2006.01)

(21) Application number: **11185345.3**

(22) Date of filing: **14.10.2011**

(54) **Polyoxymethylene polymer compositions having improved creep**

Polyoxymethylen-Polymerzusammensetzungen mit verbesserter Dauerstandfestigkeit

Compositions polymères de polyoxyméthylène dotées d'un fluage amélioré

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2010 US 954304**

(43) Date of publication of application:
**30.05.2012 Bulletin 2012/22**

(73) Proprietor: **E. I. du Pont de Nemours and Company Wilmington, DE 19898 (US)**

(72) Inventor: **Ratnagiri, Ramabhadra**
**Wilmington, DE Delaware 19810 (US)**

(74) Representative: **Dannenberger, Oliver Andre et al**
**Abitz & Partner**
**Patentanwälte**
**Postfach 86 01 09**
**81628 München (DE)**

(56) References cited:
**DE-A1- 2 813 249     US-A- 4 713 414**

**Description**

<u>FIELD</u>

The present invention relates to articles made from polyoxymethylene polymer and having improved creep resistance. The invention also relates to an improved process to manufacture articles having improved creep resistance.

<u>BACKGROUND</u>

Many articles have articulated parts in physical contact with each other, while these parts are in more or less constant motion. Such articulated parts are often made of polymeric materials and must exhibit good wear and fatigue resistance, particularly over prolonged use. It is especially in gear applications that polymeric materials must exhibit good mechanical properties such as toughness and stiffness, especially when exposed to heat.

Materials comprising polyoxymethylene (also known as polyacetals or POM) are known to have excellent tribology, good physical properties and good wear resistance. Unreinforced polyoxymethylene compositions often have good wear resistance, but can have insufficient creep resistance, particularly at elevated temperatures, resulting in deformation and/or failure of the gear. Additives such as mineral fillers and fibrous reinforcing agents are often used to improve the physical properties of POM, compositions. However, when typical reinforcing reagents, such as glass fibers, are used in polyoxymethylene compositions, the resulting improved mechanical properties can come at a price of often significant reductions in wear resistance and toughness.

U.S. Pat. Nos. 5,045,607 and 5,041,505 disclose that: certain polyoxymethylene terpolymers can be blended with polyoxymethylenes to improve physical properties of the polyoxymethylene polymer blends; the blends can be prepared by typical blending processes; and the resulting blend is then comminuted mechanically into pellets, chips, powders, etc. and processed in the thermoplastic state.

U.S. Pat. No. 4,713,414 discloses polyoxymethylenes having improved toughness by blending a polyoxymethylene, a reactive titanate, and a multiphase composite interpolymer. U.S. Pat. No. 5,919,849 teaches impact modified polyoxymethylenes by using methacrylate-butadiene-styrene stabilizers and nucleating agents such as talc, finely divided silicate, powdered sulfate or carbonate, or a terpolymer of trioxane, ethylene oxide, and butanediol diglycidyl ether.

There remains a need for articles comprising polyoxymethylene compositions having improved creep properties and stiffness, yet also with good wear resistance.

<u>SUMMARY</u>

The technical solution described herein for fulfilling this need has been to provide a process for making an article comprising a polyoxymethylene composition such that, once the composition has been heated to above its crystallization temperature, the composition remains above that temperature throughout the process. So maintaining the composition above crystallization temperature throughout article manufacture imparts to the resultant article a 5% tensile strain that is at least 20% greater than that of an article that has not been held above crystallization temperature throughout its manufacture.

Specifically, described herein are processes comprising:

    i) melt mixing a polyoxymethylene polymer composition comprising

        a) 95 to 99 weight percent of a polyoxymethylene, and
        b) 1 to 5 weight percent of a polyoxymethylene terpolymer,
        by heating the polyoxymethylene polymer above its crystallization temperature;

    ii) maintaining the melt mixed composition above the crystallization temperature of the polyoxymethylene; and
    iii) molding the composition into an article;

wherein the article has a time to 5 percent tensile strain that is at least 20 percent greater than that of an article made by the steps of melt mixing, cooling the polyoxymethylene below its crystallization temperature, reheating the polyoxymethylene composition above its crystallization temperature, and then molding the composition.

Also described herein are articles prepared by the process of the invention.

## DETAILED DESCRIPTION

### Abbreviations and Definitions

The meaning of elements recited in the claims and described in the specification are to be interpreted with reference to the abbreviations and definitions below and herein.

"%" refers to the term percent.
"wt %" refers to weight percent; "mol %" or "mole %" refers to mole percent.
"h" refers to hour; "m" refers to minute; "s" refers to seconds.

As used herein, the article "a" indicates one as well as more than one and does not necessarily limit its referent noun to the singular.

As used herein, the terms "about" and "at or about" mean that the amount or value in question may be the value designated or some other value approximately or about the same. The term is intended to convey that similar values promote equivalent results or effects recited in the claims.

As used herein, the terms "comprises," "comprising," "includes," "including," "has," "having" or any other variation of these, refer to a non-exclusive inclusion. For example, a process, method, article, or apparatus that comprises a list of elements is not limited to only the listed elements but may include other elements not expressly listed or inherent. Further, unless expressly stated to the contrary, "or" refers to an inclusive, not an exclusive, or. For example, a condition A or B is satisfied by any one of the following: A is true (or present) and B is false (or not present), A is false (or not present) and B is true (or present), and both A and B are true (or present).

As used herein, the term "consisting essentially of" refers to a limit on the scope of a claim to the recited materials or steps, which **materially** affect the novel aspects of the recited invention.

As used herein, the term "consisting of" refers to any element, step or component not expressly recited in the claim. When "consisting of" is not used in the preamble of the claim but in the body of the claim, that term limits only the elements set forth in the clause where used.

As used herein, the term "formaldehyde equivalents" refers to the fact that formaldehyde, being a gas at room temperature, readily converts to derivatives that behave similarly to gaseous formaldehyde and which are used in industry. Such derivatives are known as formaldehyde equivalents and appreciated as such by those of skill in the art, and include, but are not limited to, the cyclic compound trioxane, formalin (formaline)-which is an aqueous solution of formaldehyde, paraformaldehyde, 1,3 trioxane, reversible complexes with alcohols such as methanol, and mixtures of these. One of skill in the art would readily recognize other formaldehyde equivalents.

As used herein, the term "single step" process refers to a process in which the polyoxymethylene polymer and polyoxymethylene terpolymer, plus any optional additives or filers, are melt mixed, that is heated above the melting point of the polyoxymethylene, to form a polymer blend, and any desired further blending, melt mixing, or molding operations are conducted at or above the melting point of the polyoxymethylene (which is therefore maintained in a molten state) until the article is molded. In other words, the polymer blend, after having been melt mixed together, is not cooled below its crystallization temperature until after the polymer blend has been undergone a molding operation.

As used herein, the terms "sequential step" or "two step" process refer to a process in which a polymer is heated above its melting point, melt mixed with other compounds and/or additives to form a polymer blend, and then the polymer blend is cooled below its crystallization temperature. After being cooled, the polymer blend is subsequently reheated above its melting temperature and molded into an article. In sum, in a two step process, the polymer is heated above its crystallization temperature and then cooled below its crystallization temperature, which count as two steps.

As used herein, the term "crystallization temperature" refers to the temperature at which a crystalline polymer crystallizes upon cooling as measured by Differential Scanning Calorimerty (DSC). This is indicated by a peak in the heat flow trace.

As used herein, the term "melting point" refers to the temperature of peak heat flow due to melting as measured by Differential Scanning Calorimetry (DSC).

As used herein, the term "melt mixing" refers to a processing operation wherein a polymer is heated above its melting point in order to mix or blend other materials into the polymer until the polymer blend is essentially homogeneous. Materials which are to be blended with the polymer can be pre-blended with the polymer using a dry blending process such as tumbling and the pre-blend then heated above the polymers melting point to prepare the polymer blend. Alternatively, the other materials can be added to the polymer while the polymer is being heated to its melting point or after the polymer reaches its crystallization temperature. The materials to be blended need not be heated to above the melting point of the material, although this may be preferred.

As used herein, the term "homogeneous" refers to a polymer blend in which the polymer blend components are mixed to create a uniform composition throughout.

As used herein, "creep" is a measure of the change in tensile strain when a polymer sample is subjected to a constant tensile stress, for instance, gravity or applied mechanical or physical stress. Put differently, creep is the tendency of a solid material to slowly move or deform permanently under the influence of tensile stress.

As used herein, the term "tensile strain"--identified as $\varepsilon$--refers to the change in length, $\delta L$, of a polymer sample divided by the original length of the sample and is given by:

$$\varepsilon \ = \ \frac{\delta L}{L} \ .$$

As used herein, the term "tensile stress"-identified as $\sigma$, is the force applied, F, divided by the cross-sectional area, A, and is given by:

$$\sigma \ = \ \frac{F}{A} \ .$$

The amount of creep depends in part upon the duration of exposure to tensile stress and the stress value. If the stress value is below the yield strength of the material, the material will deform elastically, that is, not permanently. If the stress value is above the yield strength of the material, creep deformation will be permanent.

All other things being equal, greater creep occurs when materials are exposed to heat near the melting point and/or for long periods. Since creep always increases with temperature and always occurs in plastic parts under tensile stress, it is axiomatic that the greater and longer the tensile stress, the greater the creep, the chance for permanent deformation, and the potential for significant performance failure of an article.

As used herein, the term "creep resistance" refers to a polymer's ability to resist any kind of distortion when under a load over an extended period of time. "Improved creep resistance" refers to improvement by 20 percent of the time to 5% or 7% tensile strain.

As time-dependent plastic deformation, creep is measured as a function of temperature and of the application of a known mechanical load/force, typically done by hanging weights on a specimen or by a displacement arm with a load cell. One method to measure creep is tensile strain using ASTM D2990-09.

As used herein, the term "fatigue resistance" refers to the maximum tensile stress that a polymer sample can endure for a given time without breaking.

**Processes of Making Polyoxymethylene Polymer Articles Having Surprisingly Improved Tensile Strain**

Articles having excellent creep properties are capable of withstanding high temperatures without deformation. This is especially important in applications such as gears in electric motors of automobiles, which are used to raise and lower windows and to operate windshield wipers, seat adjusters, or other automotive electronic devices. In striving to decrease the overall weight of automobiles, automobile manufacturers shrink the size of electric motor assemblies by building smaller electric motors. As a result, the insides of these smaller motors, including internal gears, are exposed to higher temperatures than previously. Nowadays, such gears are under constant exposure to higher temperature and expected to perform with less deformation. That is, such gears must exhibit improved resistance to creep in order to decrease performance failure.

It has been discovered that a process of making articles, especially gears, of polyoxymethylene polymer blends that comprise certain polyoxymethylene terpolymers imparts surprisingly improved creep resistance when the polymer blend is maintained above its crystallization temperature after melt mixing relative to that of articles made of the same polymer blend but which blend has been cooled below its crystallization temperature after melt mixing.

Put differently, described herein are processes of making articles of polyoxymethylene polymer blends having certain polyoxymethylene terpolymers wherein the entire process occurs in one step, that is, occurs above the crystallization temperature of the POM polymer blend and at no point during making process, goes below that temperature. To the point, this one-step process forms pellets by melt mixing the compositional elements of the POM polyoxymethylene blend and then molding the pellets directly into an article, which has a surprisingly improved creep resistance when compared to an article made of the same compositional elements but which have been exposed to a lower than crystallization temperature upon pelletization. The surprising improvement in creep resistance is that an article made by the processes described herein exhibit 5% or 7% tensile strain that is at least 20% greater than that of an article prepared from a two-step process.

The processes described herein contrast directly with processes known in the art for making articles from the same polyoxymethylene polymer blends. Such known processes are considered two-step processes because after melt mixing, the polymer blend is cooled, and pellets formed. Following pellet formation, molding the article requires re-heating the cooled pellets to above the crystallization temperature of the polyoxymethylene polymer blend.

**Polyoxymethylene Polymer Compositions**

These processes use a polyoxymethylene polymer composition that comprises a) polyoxymethylene polymer selected from the group consisting of homopolymer, copolymer, and mixtures of these; and b) a polyoxymethylene terpolymer.

The polyoxymethylene polymer compositions of the present invention are made by melt mixing components a) and b) using any known melt mixing methods. Melt mixing may occur in a single step in which all of components a) and b) are added in a single step into a melt mixer such as a single or twin-screw extruder, batch mixer, or roll-mill to give a resin composition. Or, melt mixing may occur in multiple steps in which a portion of components a) and b) is added at a time and then mixed, until all material has been added and mixed.

**a) Polyoxymethylene**

The polyoxymethylene polymer used in the processes described herein may be homopolymer, copolymer, or a mixture of these. Homopolymer is prepared by polymerizing formaldehyde and/or formaldehyde equivalents, such as cyclic oligomers of formaldehyde.

Copolymers are derived from one or more comonomers generally used in preparing polyoxymethylenes in addition to formaldehyde and/ formaldehyde equivalents. Commonly used comonomers include acetals and cyclic ethers that lead to the incorporation into the polymer chain of ether units with 2-12 sequential carbon atoms. If a copolymer is selected, the quantity of comonomer will not be more than 10 weight percent, preferably not more than 8 weight percent, more preferably not more than 5 weight percent and most preferably about two weight percent. Preferable comonomers are 1,3-dioxolane, ethylene oxide, and butylene oxide, where 1,3-dioxolane is more preferred, and preferable polyoxymethylene copolymers are copolymers where the quantity of comonomer is about 2 weight percent.

It is also preferred that the homo- and co-polymers have terminal hydroxy groups which are end-capped either in polymerization or by a post-polymerization chemical reaction to form ester or ether groups. Preferred end groups for homopolymers are acetate and alkoxy (especially methoxy) and preferred end groups for copolymers are hydroxy, acetate, and alkoxy (especially methoxy).

The polyoxymethylene polymer will preferably be linear (unbranched) or have minimal chain-branching, and preferably have a number average molecular weight of at least 10,000, preferably 10,000-250,000, and more preferably 20,000- 90,000. The molecular weight can be conveniently measured by gel permeation chromatography in m-cresol at 160 °C using a DuPont PSM bimodal column kit with nominal pore size of 60 and 1000 Angstroms (A). The molecular weight may also be measured by determining the melt flow using ASTM D1238 or ISO 1133. The melt flow of the POM polymer is preferably in the range of 0.1 to 100 g/min, more preferably from 0.5 to 60 g/min, or yet more preferably from 0.8 to 40 g/min. for injection molding purposes. Examples ofpolyoxymethylenes are DELRIN® polymers from DuPont, Ultraform® polyoxymethylenes from BASF, Hostaform® and Celcon® from Ticona Engineering Polymers, and Tenac® polymers from Asahi Kasei.

The polyoxymethylene polymer is 95 to 99 weight percent of the polyoxymethylene polymer composition.

**b) Polyoxymethylene Terpolymer**

The polyoxymethylene terpolymer in the compositions described herein comprises cyclic ether that leads to the incorporation into the polymer chain of the polyoxymethylene terpolymer of ether units with 2-12 sequential carbon atoms, an oxide or oxolane, and formaldehyde and/or formaldehyde equivalents, such as cyclic oligomers of formaldehyde. Examples of formaldehyde equivalents are dioxolane and trioxane. Examples of oxides include ethylene oxide, propylene oxide, and butylene oxide. Examples of cyclic ethers include butanediol diglycidyl ether and propanediol diglycidyl ether.

A preferred polyoxymethylene terpolymer is butanediol diglycidyl ether/ethylene oxideltrioxane terpolymer, which U.S. 4,954,400 discloses. Such terpolymers are commercially available as Celcon® and Ultraform® polymers. Celcon U-10 is a butanediol diglycidyl ether/ethylene oxide/trioxane terpolymer containing 0.05/2.0/97.95 weight percent of each monomer respectively based on the total weight of the terpolymer.

The polyoxymethylene terpolymer is 1 to 5 weight percent of the polyoxymethylene polymer composition.

**Additives**

The polyoxymethylene compositions described herein may include from 0 to 4 weight percent of one or more organic additives selected from the group consisting of lubricants, processing aids, impact modifiers, flow modifiers, stabilizers (such as thermal stabilizers, oxidative stabilizers, ultraviolet light stabilizers), antioxidants, dyes, pigments, colorants, compatibilizers, tougheners, fluoropolymers such as poly(tetrafluoroethylene), plasticizers, reinforcing agents, fillers, and any combination of these. Inorganic nucleating agents such as talc and boron nitride are also contemplated but not expected to affect tensile strain measurements.

Suitable impact modifiers include, but are not limited to, thermoplastic polyurethanes, polyester polyether elastomers, and ethylene/alkyl acrylate, ethylene/alkyl methacrylate copolymers, and mixtures of these. Suitable lubricants include, but are not limited to, silicone lubricants such as dimethylpolysiloxanes and their derivatives; oleic acid amides; alkyl acid amides; bis-fatty acid amides such as N,N'-ethylenebisstearamide; non-ionic surfactant lubricants; hydrocarbon waxes; fluoropolymers; esters such as lower alcohol esters of fatty acids; polyvalent alcohols such as polyglycols and polyglycerols; metal salts of fatty acids such as lauric acid and stearic acid; and mixtures of these. Preferred antioxidants are hindered phenol antioxidants such as Irganox® 245 and 1090 antioxidants available from Ciba. Suitable ultraviolet light stabilizers include benzotriazoles and benzophenones. Any combination of these additives is specifically contemplated in the processes described herein.

These compositions may include 0.05 to 2 weight percent of one or more polymeric thermal stabilizers selected from the group consisting of ethylene copolymers of glycidyl esters; polyacrylamide; polymethacrylamide; polyamides; polysaccharides selected from the group consisting of amylopectin from maize and soluble starch; polyethylene/vinyl alcohol copolymers; and mixtures of these. The ethylene copolymers of glycidyl esters are of the formula E/X/Y wherein E comprises 40-90 weight percent of the ethylene copolymer and is the radical formed from ethylene and;

X comprises 10-40 weight percent of the ethylene copolymer and is a radical formed from monomers selected from the group consisting of $CH_2=C(R^1)-C(O)-OR^2$

wherein $R^1$ is H, $CH_3$ or $C_2H_5$, $R^2$ is an alkyl group having 1-8 carbon atoms; vinyl acetate; or a mixture of these; and Y comprises 0.5-20 weight percent of the ethylene copolymer and is a radical formed from monomers selected from the group consisting of

$$CH_2=C(R^1)-C(O)-OR^3$$

wherein $R^3$ is glycidyl, and $R^1$ is H, $CH_3$ or $C_2H_5$.

When fillers are used, they may range from 0 to 4 weight percent of filler(s) based on the total weight of the composition. The filler may be any material commonly used as such, e.g., reinforcing agents, and other fillers. The filler may or may not have a coating on it, for example, a sizing and/or a coating to improve adhesion of the filler to the polymers of the composition. The filler may be organic or inorganic. Useful fillers include clay, sepiolite, wollastonite, mica, and calcium carbonate; glass in various forms such as fibers, milled glass, solid or hollow glass spheres; carbon as black or fiber; titanium dioxide; aramid in the form of powders; metal powders, and combinations of these.

When additives are used, the processes described herein may also include blending the additives with components a) and b) all together at one time or sequentially in a step-wise fashion until the additives and components a) and b) are blended.

**Articles**

Also described herein are articles of the compositions described herein. These can be molded using any suitable melt molding technique known in the art. Commonly used molding methods known in the art include injection molding, extrusion molding, blow molding, rotational molding, and compression molding. Injection molding and compression molding are the preferred melt molding methods to manufacture articles of this invention. The compositions of the present invention can also be formed into sheets from which articles can then be cut from the sheet in the desired shapes. The compositions may be overmolded onto an article made from a different material. The articles may be further formed into other shapes by machining.

Articles described herein may include gears for use in an electric or mechanical motor; an electric motor for use in a vehicle; a vehicle window motor; windshield wiper motor; or vehicle seat adjuster.

**Single Step Process versus Two Step Process for Making Articles**

Regardless of the melt mixing or molding method used to make the articles described herein, the melt mixing or molding process must be a single step process. In a single step process, the polyoxymethylene and polyoxymethylene terpolymer, along with any optional additives or fillers, are melt mixed together to form a polymer blend and the polymer blend remains at or above the crystallization temperature of the polyoxymethylene (maintained in the molten state) until the article is molded. For example, in a single step process, the polyoxymethylene is fed into a melt mixing machine such as a twin or single screw extruder or an injection molding unit with a reciprocating screw. The polyoxymethylene terpolymer and any optional additives which are to be blended into the polyoxymethylene composition can either be pre-mixed with the polyoxymethylene before being fed into the extruder or can be fed separately into the extruder using a different feed port in the extruder. The premixing step, if used, is typically a dry blending operation or an operation that does not heat the polyoxymethylene to its crystallization temperature in order to mix the materials. The polyoxymethylene and any additional additives are then melt-mixed in the extruder to make a polymer blend and this blend is then molded into an article. The polymer blend remains above the crystallization temperature of the polyoxymethylene until the article is molded. In other words, the polyoxymethylene has been exposed to a single heating cycle.

In a sequential or two step process, the polyoxymethylene is fed into an extruder; additives to be blended into the polyoxymethylene composition are either pre-mixed with the polyoxymethylene before being fed into the extruder or are fed separately into the extruder using a different feed port in the extruder. The melt mixed polymer blend is then extruded and the composition cooled (typically in a water bath) to below the crystallization temperature of the polyoxymethylene and typically cut into pellets, beads, rods or other physical shapes to make a polyoxymethylene polymer blend composition. This is the first step in the process.

In the second step, the polyoxymethylene polymer blend composition in pellet, bead, or other physical form, is fed into a molding machine, heated above the crystallization temperature of the polyoxymethylene polymer blend composition for a second time and molded into an article.

Articles prepared from a composition comprising a polyoxymethylene and polyoxymethylene terpolymer using a single step melt mixing and molding process of the invention have superior creep resistance and fatigue resistance compared to articles prepared from a sequential step mixing and molding process.

## Examples

The Examples below are intended only to further explicate and not to limit the scope of the processes and articles described herein.

## Materials

The following materials were used in the examples (E1-E4) and comparative examples (C1-C8) of the invention:

PA-1 is an acetate end-capped polyoxymethylene homopolymer having a MFR of 2.3 (190C @ 2.16 kg - ISO 1133), a melting point of 178°C, and a number average molecular weight of 65,000 g/mol.

PAT-A is a pelletized polyoxymethylene terpolymer consisting of 0.05 weight percent butanediol diglycidyl ether, 2 weight percent dioxolane, and 97.95 weight percent trioxane based on the total weight of the terpolymer and is available from Hoechst Celanese Corporation.

PAT-B is a non-pelletized polyoxymethylene terpolymer consisting of 0.05 weight percent butanediol diglycidyl ether, 2 weight percent dioxolane, and 97.95 weight percent trioxane based on the total weight of the terpolymer and is available from Hoechst Celanese Corporation.

Ultratalc® 609 is ultrafine ground talc having a mean particle size of less than 0.9 $\mu$m (microns) and is available from Specialty Minerals, Inc.

Irganox® 1098 is a phenolic primary antioxidant for processing and long-term thermal stabilization: N-N'-hexane-1,6-diylbis(3-(3,5-di-tert-butyl-4-hydroxyphenylpropionamide)) available from, Ciba Specialty Chemicals..

MAP 1070 is a polyacrylamide thermal stabilizer and is a 20 weight percent polyethylene glycol coated polyacrylamide

## Methods

### Creep

Creep is measured by molding tensile bars and subjecting them to a constant stress. Tensile bars for creep testing were Type I specimens as outlined in ASTM D638-08. Tensile creep tests were carried out according to ASTM D2990-09 at 90°C and an initial stress of 25MPa. Tensile strain of the samples was measured using an extensiometer. All samples were strained to approximately 10 percent tensile strain. Tensile bars were molded using both a one step process and a two step process as defined.

**Peak Crystallization Temperature**

Peak crystallization temperature was measured using DSC measurements. Small samples of polymer (10 - 20mg) were cut from the center of the injection molded bars for thermal analysis. For each sample, three specimens were collected. The specimen's crystallization temperature was measured using a TA instruments Q1000 thermal analysis unit. Each test sample was preconditioned at 25°C for 10min. Then the sample was heated at a programmed heating rate of 10°C/min to a final temperature of 220°C. The sample was held at 220°C for 5 minutes. Then the sample was cooled at 10°C/min to 25°C. The onset of crystallization and peak crystallization temperature were calculated from the heat flow trace. An average value from three different specimens for each sample composition was computed.

**Molding Operation using Single Step Process**

In the one-step process, the POM, polyoxymethylene terpolymer, and other ingredients as disclosed in Table 1 were dry (solid) blended (by hand-tumbling) together to make a polymer preblend composition having a uniform distribution of ingredients. This composition was then fed into an injection molding unit, whose barrels were heated to 200 - 210°C. The mold was heated to 90°C. An insert mold in the shape as prescribed by ASTM D638-08 Type I was used to mold specimens for measurement of tensile creep. The resulting specimens were equilibrated at 23°C, 50 percent humidity for 48hr prior to testing.

**Molding Operation using Two Step Process**

In the sequential step or two step process the POM, and other ingredients for the comparative examples as disclosed in Table 1 were dry (solid) blended (by hand-tumbling) together to make a polymer preblend composition having a uniform distribution of ingredients. This preblend was fed into a 30mm co-rotating twin-screw extruder with mixing and melting zones, fitted with a 4.7 mm (0.187") diameter 2-hole strand die, from Coperion Corporation, Ramsey, NJ USA. A barrel temperature of 200 - 210°C and a throughput of 13.6 kg/h (30lb/hr) at 150rpm was used to melt mix the composition. The resultant molten extrudate was quenched in a water bath at 25°C and pelletized into cylindrical pellets, approximately 6.4 mm (0.25") long and 3.2 mm (0.125") diameter. The pellets were then dried for 4 hr at 80°C under a vacuum of 80 kPa or greater. After drying, the pellets were fed into the same injection molding unit as the "single-step" process. Using similar molding conditions as the single step process, the melt mixed polymer blend was injection molded into specimens for testing. The molded specimens were equilibrated at 23°C, 50% humidity for 48hr prior to testing.

The compositions used in examples E1-E4 and comparative examples C1-C8 are shown in Table 1 along with tensile strain properties and crystallization temperatures of the molded articles. Tensile strain measures the degree of creep of the polymer composition.

**Table 1**

| Example | E1 | C1 | E2 | C2 | E3 | C3 | E4 | C4 | C5 | C6 | C7 | C8 |
|---|---|---|---|---|---|---|---|---|---|---|---|---|
| PA1 | 98 | 98 | 97.45 | 97.45 | 98 | 98 | 97.45 | 97.45 | 99.9 | 99.35 | 100 | 99.45 |
| MAP 1070 | | | 0.475 | 0.475 | | | 0.475 | 0.475 | | 0.475 | | 0.475 |
| Irganox® 1098 | | | 0.075 | 0.075 | | | 0.075 | 0.075 | | 0.075 | | 0.075 |
| PAT-A | 2 | 2 | 2 | 2 | | | | | | | | |
| PAT-B | | | | | 2 | 2 | 2 | 2 | | | | |
| Ultratalc® 609 | | | | | | | | | 0.1 | 0.1 | | |
| | | | | | | | | | | | | |
| **Physical properties** | | | | | | | | | | | | |
| Time (sec.) 5% Tensile Strain - One Step Process | 2040 | | 1560 | | 1620 | | 1050 | | 1050 | 585 | 215 | 270 |
| Time (sec.) 5% Tensile Strain - Two Step Process | | 1455 | | 1110 | | 600 | | 500 | 1275 | 548 | not measured | 120 |
| Time (sec.) 7% Tensile Strain - One Step Process | 5925 | | 5580 | | 4620 | | 3105 | | 3045 | 1875 | 705 | 945 |
| Time (sec.) 7% Tensile Strain - Two Step Process | | 4425 | | 3450 | | 1935 | | 1635 | 3735 | 1740 | not measured | 450 |
| Peak Crystallization Temperature | 154.9 | 153.2 | 154.7 | 152.3 | 152.8 | 151.6 | 154.1 | 149.9 | 152 /151.8* | 153.7/150* | 152.8 / -* | 152.7 /148.8* |

(continued)

| Physical properties | | | | | | | | | | | | |
|---|---|---|---|---|---|---|---|---|---|---|---|---|
| | | | | | | | | | | | | |
| Percentage of materials are based on the total weight of the composition * one step process / two step process | | | | | | | | | | | | |

Examples E1- E4 have undergone a single step melt mixing and molding process. Comparative examples C1-C4 have undergone a two step melt mixing and molding process using the same compositions as the respective examples.

In Table 1, E1 and E2 are compositions identical to C1 and C2, respectively, Table 1 shows that, for E1 and E2 compositions, the use of a single step melt mixing and molding process produces molded articles that have a time to 5% or 7% tensile strain that is at least 20% greater than that of a molded article made by sequential steps of melt mixing and molding C1 and C2.

Table 1 also shows that the addition of stabilizers to the composition may be unnecessary when a single step process is used along with a polyoxymethylene terpolymer to prepare the molded articles. E1 and E3, both having no stabilizers have superior creep properties compared to E2 and E4, both having stabilizers, even though a single step melt mixing and molding process is used for all four examples.

Comparative example C5 has undergone either a single or two step melt-mixing and molding process and additionally contains talc (Ultratalc® 609) as a nucleating agent in place of a polyoxymethylene terpolymer. Talc is a common nucleating agent used in polymers and when used in this comparative example without stabilizers (MAP 1070 and Irganox® 1098), the two step process resulted in molded articles which have superior creep properties compared to the one step process. When stabilizers are present in the composition (C6), the one step process shows a slight improvement over the two step process.

Comparative examples C7-C8 have undergone either a single or two step melt-mixing and molding process without any nucleating agent. These compositions provide molded articles that are significantly inferior to molded articles containing a nucleating agent. This is true even if stabilizers are present (C8).

**Claims**

1. A process comprising:

   i) melt mixing a polyoxymethylene polymer composition comprising

   a) 95-99 weight percent of a polyoxymethylene selected from the group consisting of homopolymer and copolymer, and
   b) 1-5 weight percent of a polyoxymethylene terpolymer,

   by heating the polyoxymethylene above its crystallization temperature;
   ii) maintaining the melt mixed composition above the crystallization temperature of the polyoxymethylene; and
   iii) molding the composition into an article;

   wherein the article has a time to 5 percent tensile strain that is at least 20 percent greater than that of an article made by the steps of melt mixing, cooling the polyoxymethylene below its crystallization temperature, reheating the polyoxymethylene composition above its crystallization temperature, and then molding the composition.

2. The process of claim 1, wherein the polyoxymethylene terpolymer is a butanediol diglycidyl ether/ethylene oxide/ trioxane terpolymer.

3. The process of claim 2, wherein the butanediol diglycidyl ether component comprises from 0.02 weight percent to 2 weight percent, the ethylene oxide component comprises from 0.5 weight percent to 5 weight percent, and the trioxane component comprises from 93 weight percent to 99.48 weight percent of the polyoxymethylene terpolymer.

4. The process of claim 1, 2 or 3, wherein the polyoxymethylene terpolymer is in the form of a pellet.

5. The process of claim 1, 2, 3 or 4, wherein the polyoxymethylene composition further comprises 1 to 4 weight percent of an additive selected from the group consisting of:

   lubricants, processing aids, impact modifiers, flow modifiers, thermal stabilizers, oxidative stabilizers, ultraviolet light stabilizers, plasticizers, antioxidants, dyes, pigments, colorants, compatibilizers, tougheners, fluoropolymers, plasticizers, reinforcing agents, fillers, and any combination of these.

6. A process comprising:

   i) melt mixing a composition comprising

a) 95-99 weight percent of a polyoxymethylene selected from the group consisting of homopolymer and copolymer, and

b) 1-5 weight percent of a polyoxymethylene terpolymer,

by heating the polyoxymethylene above its crystallization temperature;

ii) maintaining the melt mixed composition above the crystallization temperature of the polyoxymethylene; and

iii) molding the composition into an article;

wherein the article has a time to 7 per cent tensile strain that is at least 20 percent greater than that of an article made by the steps of melt mixing, cooling the polyoxymethylene below its crystallization temperature, reheating the polyoxymethylene composition above its crystallization temperature, and then molding the composition.

7. The process of claim 6, wherein the polyoxymethylene terpolymer is a butanediol diglycidyl ether/ethylene oxide/ trioxane terpolymer

8. The process of claim 7, wherein the butanediol diglycidyl ether component comprises from 0.02 weight percent to 2 weight percent, the ethylene oxide component comprises from 0.5 weight percent to 5 weight percent , and the trioxane component comprises from 93 weight percent to 99.48 weight percent of the polyoxymethylene terpolymer.

9. The process of claim 6, 7, or 8, wherein the polyoxymethylene terpolymer is in the form of a pellet.

10. The process of claim 6, 7, 8, or 9, wherein the polyoxymethylene composition further comprises 1 to 4 weight percent of an additive selected from the group consisting of:

lubricants, processing aids, impact modifiers, flow modifiers, thermal stabilizers, oxidative stabilizers, ultraviolet light stabilizers, plasticizers, antioxidants, dyes, pigments, colorants, compatibilizers, tougheners, fluoropolymers, plasticizers, reinforcing agents, fillers, and any combination of these.

11. An article made by the process of claim 1, 2, 3, or 4, wherein the article has a time to 5 percent tensile strain that is at least 20 percent greater than that of an article made by sequential steps of melt mixing, cooling the polyoxymethylene below its crystallization temperature, reheating the polyoxymethylene composition above its crystallization temperature, and then molding the composition.

12. The article of claim 11 in the form of a gear.

13. The article of claim 11 in the form of an electric motor for use in a vehicle, a vehicle window motor, a windshield wiper motor, or a vehicle seat adjuster.

14. An article made by the process of claim 6, 7, 8 or 9, wherein the article has a time to 7 percent tensile strain that is at least 20 percent greater than that of an article made by sequential steps of melt mixing, cooling the polyoxymethylene below its crystallization temperature, reheating the polyoxymethylene composition above its crystallization temperature, and then molding the composition..

15. The article of claim 14 in the form of a gear.

16. The article of claim 14 in the form of an electric motor for use in a vehicle, a vehicle window motor, a windshield wiper motor, or a vehicle seat adjuster.

**Patentansprüche**

1. Verfahren umfassend:

i) das Schmelzmischen einer Polyoxymethylen-Polymerzusammensetzung umfassend

a) 95 - 99 Gewichtsprozent eines Polyoxymethylens ausgewählt aus der Gruppe bestehend aus Homopolymer und Copolymer und

b) 1 - 5 Gewichtsprozent eines Polyoxymethylenterpolymers,

durch Erhitzen des Polyoxymethylens auf über seine Kristallisationstemperatur;
ii) das Halten der schmelzgemischten Zusammensetzung bei über der Kristallisationstemperatur des Polyoxymethylens; und
iii) das Formen der Zusammensetzung zu einem Artikel;

wobei der Artikel eine Zeitspanne bis zur 5 %igen Zugverformung aufweist, die mindestens 20 Prozent länger ist als diejenige eines Artikels, der durch die Schritte des Schmelzmischens, Kühlens des Polyoxymethylens auf unter seine Kristallisationstemperatur, Wiedererhitzens der Polyoxymethylenzusammensetzung auf über ihre Kristallisationstemperatur und dann Formens der Zusammensetzung hergestellt wird.

2. Verfahren nach Anspruch 1, wobei das Polyoxymethylenterpolymer ein Butandioldiglycidylether-Ethylenoxid-Trioxan-Terpolymer ist.

3. Verfahren nach Anspruch 2, wobei die Butandioldiglycidyletherkomponente 0,02 Gewichtsprozent bis 2 Gewichtsprozent, die Ethylenoxidkomponente 0,5 Gewichtsprozent bis 5 Gewichtsprozent und die Trioxankomponente 93 Gewichtsprozent bis 99,48 Gewichtsprozent des Polyoxymethylenterpolymers umfasst.

4. Verfahren nach Anspruch 1, 2 oder 3, wobei das Polyoxymethylenterpolymer in Form eines Kügelchens vorliegt.

5. Verfahren nach Anspruch 1, 2, 3 oder 4, wobei die Polyoxymethylenzusammensetzung des Weiteren 1 bis 4 Gewichtsprozent eines Zusatzmittels umfasst ausgewählt aus der Gruppe bestehend aus: Gleitmitteln, Verarbeitungshilfsmitteln, Schlagmodifiziermitteln, Verlaufmitteln, Wärmestabilisatoren, oxidativen Stabilisatoren, Ultraviolettlichtstabilisatoren, Weichmachern, Antioxidationsmitteln, Farbstoffen, Pigmenten, Farbmitteln, Verträglichmachern, Zähigkeitsverbesserem, Fluorpolymeren, Weichmachern, Verstärkungsmitteln, Füllstoffen und irgendwelchen Kombinationen derselben.

6. Verfahren umfassend:

   i) das Schmelzmischen einer Zusammensetzung umfassend

      a) 95 - 99 Gewichtsprozent eines Polyoxymethylens ausgewählt aus der Gruppe bestehend aus Homopolymer und Copolymer und
      b) 1 - 5 Gewichtsprozent eines Polyoxymethylenterpolymers,

   durch Erhitzen des Polyoxymethylens auf über seine Kristallisationstemperatur;
   ii) das Halten der schmelzgemischten Zusammensetzung bei über der Kristallisationstemperatur des Polyoxymethylens; und
   iii) das Formen der Zusammensetzung zu einem Artikel;

wobei der Artikel eine Zeitspanne bis zur 7 %igen Zugverformung aufweist, die mindestens 20 Prozent länger ist als diejenige eines Artikels, der durch die Schritte des Schmelzmischens, Kühlens des Polyoxymethylens auf unter seine Kristallisationstemperatur, Wiedererhitzens der Polyoxymethylenzusammensetzung auf über ihre Kristallisationstemperatur und dann Formens der Zusammensetzung hergestellt wird.

7. Verfahren nach Anspruch 6, wobei das Polyoxymethylenterpolymer ein Butandioldiglycidylether-Ethylenoxid-Trioxan-Terpolymer ist.

8. Verfahren nach Anspruch 7, wobei die Butandioldiglycidyletherkomponente 0,02 Gewichtsprozent bis 2 Gewichtsprozent, die Ethylenoxidkomponente 0,5 Gewichtsprozent bis 5 Gewichtsprozent und die Trioxankomponente 93 Gewichtsprozent bis 99,48 Gewichtsprozent des Polyoxymethylenterpolymers umfasst.

9. Verfahren nach Anspruch 6, 7 oder 8, wobei das Polyoxymethylenterpolymer in Form eines Kügelchens vorliegt.

10. Verfahren nach Anspruch 6, 7, 8 oder 9, wobei die Polyoxymethylenzusammensetzung des Weiteren 1 bis 4 Gewichtsprozent eines Zusatzmittels umfasst ausgewählt aus der Gruppe bestehend aus: Gleitmitteln, Verarbeitungshilfsmitteln, Schlagmodifiziermitteln, Verlaufmitteln, Wärmestabilisatoren, oxidativen Stabilisatoren, Ultraviolettlichtstabilisatoren, Weichmachern, Antioxidationsmitteln, Farbstoffen, Pigmenten, Farbmitteln, Verträglichmachern, Zähigkeitsverbesserem, Fluorpolymeren, Weichmachern, Verstärkungsmitteln, Füllstoffen und irgendwelchen Kombinationen derselben.

11. Artikel, der durch das Verfahren nach Anspruch 1, 2, 3 oder 4 hergestellt wird, wobei der Artikel eine Zeitspanne bis zur 5 %igen Zugverformung aufweist, die mindestens 20 Prozent länger ist als diejenige eines Artikels, der durch die aufeinanderfolgenden Schritte des Schmelzmischens, Kühlens des Polyoxymethylens auf unter seine Kristallisationstemperatur, Wiedererhitzens der Polyoxymethylenzusammensetzung auf über ihre Kristallisationstemperatur und dann Formens der Zusammensetzung hergestellt wird.

12. Artikel nach Anspruch 11 in Form eines Getriebes.

13. Artikel nach Anspruch 11 in Form eines elektrischen Motors zur Verwendung in einem Fahrzeug, einem Fahrzeugscheibenmotor, einem Windschutzscheibenwischermotor oder einer Fahrzeugsitzeinstellvorrichtung.

14. Artikel, der durch das Verfahren nach Anspruch 6, 7, 8 oder 9 hergestellt wird, wobei der Artikel eine Zeitspanne bis zur 7 %igen Zugverformung aufweist, die mindestens 20 Prozent länger ist als diejenige eines Artikels, der durch die aufeinanderfolgenden Schritte des Schmelzmischens, Kühlens des Polyoxymethylens auf unter seine Kristallisationstemperatur, Wiedererhitzens der Polyoxymethylenzusammensetzung auf über ihre Kristallisationstemperatur und dann Formens der Zusammensetzung hergestellt wird.

15. Artikel nach Anspruch 14 in Form eines Getriebes.

16. Artikel nach Anspruch 14 in Form eines elektrischen Motors zur Verwendung in einem Fahrzeug, einem Fahrzeugscheibenmotor, einem Windschutzscheibenwischermotor oder einer Fahrzeugsitzeinstellvorrichtung.

## Revendications

1. Procédé comprenant:

   i) le mélange à l'état fondu d'une composition polymère de polyoxyméthylène comprenant

   a) 95 à 99 pour cent en poids d'un polyoxyméthylène sélectionné parmi le groupe constitué d'un homopolymère et d'un copolymère, et
   b) 1 à 5 pour cent en poids d'un terpolymère de polyoxyméthylène,

   par le chauffage du polyoxyméthylène au-dessus de sa température de cristallisation;
   ii) le maintien de la composition mélangée à l'état fondu au-dessus de la température de cristallisation du polyoxyméthylène; et
   iii) le moulage de la composition en un article;

   dans lequel l'article a une durée jusqu'à un allongement en traction de 5 pour cent qui est au moins 20 pour cent supérieure à celle d'un article fabriqué selon les étapes de mélange à l'état fondu, de refroidissement du polyoxyméthylène en dessous de sa température de cristallisation, de chauffage à nouveau de la composition de polyoxyméthylène au-dessus de sa température de cristallisation, et ensuite de moulage de la composition.

2. Procédé selon la revendication 1, dans lequel le terpolymère de polyoxyméthylène est un terpolymère d'éther diglycidylique de butanediol/oxyde d'éthylène/trioxane.

3. Procédé selon la revendication 2, dans lequel le composant éther diglycidylique de butanediol est compris en une quantité de 0,02 pour cent en poids à 2 pour cent en poids, le composant oxyde d'éthylène est compris en une quantité de 0,5 pour cent en poids à 5 pour cent en poids, et le composant trioxane est compris en une quantité de 93 pour cent en poids à 99,48 pour cent en poids du terpolymère de polyoxyméthylène.

4. Procédé selon la revendication 1, 2 ou 3, dans lequel le terpolymère de polyoxyméthylène se présente sous la forme d'un granule.

5. Procédé selon la revendication 1, 2, 3 ou 4, dans lequel la composition de polyoxyméthylène comprend en outre 1 à 4 pour cent en poids d'un additif sélectionné parmi le groupe constitué: des lubrifiants, des auxiliaires de transformation, des agents de modification de la résistance aux chocs, des agents de modification de la fluidité, des agents de stabilisation thermique, des agents de stabilisation de l'oxydation, des agents de stabilisation vis-à-vis de la lumière ultraviolette, des agents plastifiants, des agents antioxydants, des teintures, des pigments, des colorants, des agents de mise en compatibilité, des agents de durcissement, des polymères fluorés, des agents plastifiants, des agents de renforcement, des charges et n'importe quelle combinaison de ceux-ci.

6. Procédé comprenant:

   i) le mélange à l'état fondu d'une composition comprenant

      a) 95 à 99 pour cent en poids d'un polyoxyméthylène sélectionné parmi le groupe constitué d'un homopolymère et d'un copolymère, et
      b) 1 à 5 pour cent en poids d'un terpolymère de polyoxyméthylène,

   par le chauffage du polyoxyméthylène au-dessus de sa température de cristallisation;
   ii) le maintien de la composition mélangée à l'état fondu au-dessus de la température de cristallisation du polyoxyméthylène; et
   iii) le moulage de la composition en un article;

dans lequel l'article a une durée jusqu'à un allongement en traction de 7 pour cent qui est au moins 20 pour cent supérieure à celle d'un article fabriqué suivant les étapes de mélange à l'état fondu, de refroidissement du polyoxyméthylène en dessous de sa température de cristallisation, de chauffage à nouveau de la composition de polyoxyméthylène au-dessus de sa température de cristallisation, et ensuite de moulage de la composition.

7. Procédé selon la revendication 6, dans lequel le terpolymère de polyoxyméthylène est un terpolymère d'éther diglycidylique du butanediol/oxyde d'éthylène/trioxane.

8. Procédé selon la revendication 7, dans lequel le composant éther diglycidylique de butanediol est compris en une quantité de 0,02 pour cent en poids à 2 pour cent en poids, le composant oxyde d'éthylène est compris en une quantité de 0,5 pour cent en poids à 5 pour cent en poids, et le composant trioxane est compris en une quantité de 93 pour cent en poids à 99,48 pour cent en poids du terpolymère de polyoxyméthylène.

9. Procédé selon la revendication 6, 7 ou 8, dans lequel le terpolymère de polyoxyméthylène est présent sous la forme d'un granule.

10. Procédé selon la revendication 6, 7, 8 ou 9, dans lequel la composition de polyoxyméthylène comprend en outre 1 à 4 pour cent en poids d'un additif sélectionné parmi le groupe constitué: des lubrifiants, des auxiliaires de transformation, des agents de modification de la résistance aux chocs, des agents de modification de la fluidité, des agents de stabilisation thermique, des agents de stabilisation de l'oxydation, des agents de stabilisation vis-à-vis de la lumière ultraviolette, des agents plastifiants, des agents antioxydants, des teintures, des pigments, des colorants, des agents de mise en compatibilité, des agents de durcissement, des polymères fluorés, des agents plastifiants, des agents de renforcement, des charges et n'importe quelle combinaison de ceux-ci.

11. Article fabriqué selon le procédé selon la revendication 1, 2, 3 ou 4, dans lequel l'article a une durée jusqu'à l'allongement en traction de 5 pour cent qui est au moins 20 pour cent supérieure à celle d'un article fabriqué par des étapes séquentielles de mélange à l'état fondu, de refroidissement du polyoxyméthylène en dessous de sa température de cristallisation, de chauffage à nouveau de la composition de polyoxyméthylène au-dessus de sa température de cristallisation, et ensuite de moulage de la composition.

12. Article selon la revendication 11, se présentant sous la forme d'un engrenage.

13. Article selon la revendication 11, se présentant sous la forme d'un moteur électrique pour l'utilisation dans un véhicule, un moteur de fenêtre de véhicule, un moteur d'essuie-glace de pare-brise ou un dispositif d'ajustement d'un siège de véhicule.

14. Article fabriqué selon le procédé selon la revendication 6, 7, 8 ou 9, dans lequel l'article a une durée jusqu'à l'allongement en traction de 7 pour cent qui est au moins 20 pour cent supérieure à celle d'un article fabriqué par les étapes séquentielles de mélange à l'état fondu, de refroidissement du polyoxyméthylène en dessous de sa température de cristallisation, de chauffage à nouveau de la composition de polyoxyméthylène au-dessus de sa température de cristallisation, et ensuite de moulage de la composition.

15. Article selon la revendication 14, qui se présente sous la forme d'un engrenage.

16. Article selon la revendication 14, qui se présente sous la forme d'un moteur électrique pour l'utilisation dans un véhicule, un moteur de fenêtre de véhicule, un moteur d'essuie-glace de pare-brise ou un dispositif d'ajustement d'un siège de véhicule.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5045607 A
- US 5041505 A
- US 4713414 A
- US 5919849 A
- US 4954400 A